# EUROPÄISCHE PATENTANMELDUNG

(11) **EP 2 551 178 A1**
(43) Veröffentlichungstag der Anmeldung: **30.01.2013**
(21) Anmeldenummer: 11175984.1
(22) Anmeldetag: 29.07.2011
(51) Int. Cl.: B62K 19/38, B62K 21/02, B62L 1/16

(54) **Fahrradgabel mit Bremseinheit**

(71) Anmelder: Canyon Bicycles GmbH, 56073 Koblenz (DE)
(72) Erfinder: Kohl, Wolfgang, 91126 Schwabach (DE); Thoma, Vincenz, 56068 Koblenz (DE); Scheffer, Lutz, 82467 Garmisch-Partenkirchen (DE)
(74) Vertreter: von Kreisler Selting Werner

(57) **Zusammenfassung**

Eine Fahrradgabel mit integrierter Bremseinheit, die insbesondere für Rennräder und Zeitfahrmaschinen geeignet ist, weist zwei über eine Gabelkrone (24) miteinander verbundene Gabelbeine (26) auf. Mit der Gabelkrone (24) ist ferner eine untere Lageraufnahme (22) verbunden. Erfindungsgemäß ist die Bremseinheit (44) unterhalb der Gabelkrone (24) angeordnet, wobei ein Aktivierungselement (50) wie ein Bowdenzug zur Aktivierung bzw. Betätigung der Bremseinheit durch die untere Lageraufnahme geführt ist.

## Beschreibung

Die Erfindung betrifft eine Fahrradgabel mit Bremseinheit, insbesondere für Rennräder, besonders bevorzugt für Zeitfahrmaschinen.

Bei Rennrädern und insbesondere bei Zeitfahrmaschinen spielt die Aerodynamik eine wichtige Rolle. Fahrradhersteller sind daher bestrebt, zur Verbesserung der Aerodynamik die Anordnung und Ausgestaltung der Vorderradbremse zu verändern, da eine in Fahrtrichtung vor der Fahrradgabel angeordnete Vorderradbremse zu erheblichen Luftverwirbelungen führt und somit die Aerodynamik stark beeinträchtigt. Es ist bekannt, die Vorderradbremse auf der in Fahrtrichtung Rückseite der Gabelkrone bzw. Gabelbrücke, die die beiden Gabelbeine miteinander verbindet, anzuordnen. Hierdurch kann eine gewisse Verbesserung der Aerodynamik erzielt werden, da die Vorderradbremse nicht direkt vom Fahrtwind angeströmt wird. Allerdings treten auch hierbei weiterhin erhebliche Verwirbelungen auf. Des Weiteren besteht bei derartigen Bremsenanordnungen der Nachteil, dass der Bremszug seitlich neben dem Steuerrohr des Rahmens angeordnet ist und somit ebenfalls zu einer Verschlechterung der Aerodynamik führt.

Ferner werden bei Zeitfahrmaschinen sogenannte Doppelbrückengabeln verwendet. Eine derartige Gabel weist eine die beiden Gabelbeine miteinander verbindende Gabelkrone auf, wobei die Gabelkrone eine untere Lageraufnahme, wie einen Lagerzapfen, trägt. In Fahrtrichtung vor der Gabelkrone ist der Gabelschaft angeordnet. Der Gabelschaft ist somit vor dem Steuerrohr des Fahrradrahmens angeordnet. Von einem weiteren Bauteil wird das obere Steuerlager getragen. Dieses Bauteil wird vor dem Steuerrohr des Rahmens mit dem Gabelschaft verbunden und stellt ferner die Verbindung zu dem Lenker entsprechend eines Vorbaus dar. Die beiden Steuerlager sind über eine massive, eine hohe Steifigkeit aufweisende Gewindestange verbunden und gegeneinander verspannt. Durch dieses durchgehende zwischen den beiden Steuerlagern angeordnete Steuerrohr wird die erforderliche Steifigkeit realisiert.

Aufgabe der Erfindung ist es, eine Fahrradgabel mit Bremseinheit zu schaffen, mit der die Aerodynamik verbessert werden kann.

Die Lösung der Aufgabe erfolgt erfindungsgemäß durch die Merkmale des Anspruchs 1.

Die erfindungsgemäße Fahrradgabel mit Bremseinheit, die insbesondere für Rennräder und besonders bevorzugt für Zeitfahrmaschinen entwickelt wurde, weist zwei miteinander über eine Gabelkrone verbundene Gabelbeine auf. Die Gabelkrone ist mit einer unteren, insbesondere als Lagerzapfen ausgebildeten Lageraufnahme verbunden. Hierbei handelt es sich vorzugsweise um eine Lageraufnahme, die von unten in das Steuerrohr des Fahrradrahmens eingesteckt wird, das Steuerrohr jedoch nicht vollständig durchdringt, so dass auch keine direkte Verbindung zwischen der unteren Lageraufnahme und der oberen Lageraufnahme vorgesehen sein muss. Um die Bremseinheit erfindungsgemäß unterhalb bzw. zumindest teilweise innerhalb der Gabelkrone anordnen zu können, ist ein Aktivierungselement für die Bremse, wie ein Bowdenzug oder dergleichen durch die untere Lageraufnahme bzw. das in der Lageraufnahme angeordnete untere Lagerelement geführt. Das Aktivierungselement, bei dem es sich anstelle eines Seilzugs auch um eine Hydraulikleitung oder auch eine elektrische Leitung handeln kann, ist somit im Wesentlichen von oben zu der Bremseinheit geführt. Dies hat den Vorteil, dass auch das Aktivierungselement zumindest in diesem Bereich innerhalb des Rahmens angeordnet ist und keine Zuführung eines Bowdenzuges oder eines anderen Aktivierungselements von außen, seitlich zur Bremseinheit erforderlich ist. Hierdurch kann die Aerodynamik des Fahrrads weiter verbessert werden, da kein eine Verwirbelung hervorrufendes Aktivierungselement wie ein Bowdenzug im Luftstrom angeordnet ist. Besonders bevorzugt ist es hierbei, dass das Aktivierungselement von dem am Lenker angeordneten Bremshebel durch den Lenker, vorzugsweise unmittelbar durch den Vorbau und sodann durch, in besonders bevorzugter Ausführungsform sowohl die obere als auch die untere Lageraufnahme geführt ist. Hierbei können die beiden Lageraufnahmen mit einem insbesondere steif ausgebildeten Steuerrohr verbunden sein, wobei das Steuerrohr insbesondere die beiden in den Lageraufnahmen angeordneten Lagerelemente vorspannt.

Eine besonders bevorzugte Ausführungsform der erfindungsgemäßen Fahrradgabel weist zusätzlich einen Gabelschaft auf, der zur Gabelkrone versetzt angeordnet ist. Der Gabelschaft trägt daher vorzugsweise kein Lager und ist in montiertem Zustand, vorzugsweise in Fahrtrichtung vor dem Steuerrohr, angeordnet. Der Gabelschaft kann mit einem zusätzlichen Bauteil wie einem Vorbau verbunden werden, das sodann die obere Lageraufnahme trägt und eine Verbindung zum Lenker darstellt.

Erfindungsgemäß ist die Bremseinheit unterhalb der Gabelkrone angeordnet. Dies ist erfindungsgemäß in besonders bevorzugter Ausführungsform möglich, da der Gabelschaft zu der Gabelkrone versetzt angeordnet ist und in montiertem Zustand in Fahrtrichtung vor dem Steuerrohr verläuft. Da der Gabelschaft vorzugsweise im Wesentlichen geradlinig nach unten verläuft und in die Gabelbeine übergeht, ist unterhalb der Gabelkrone ein Bereich geschaffen, in dem die Bremseinheit angeordnet werden kann. Durch die erfindungsgemäße Anordnung der Bremseinheit unterhalb der Gabelkrone bei einer Doppelbrückengabel kann eine Integration der Bremseinheit in die Fahrradgabel realisiert werden. Hierdurch kann gegenüber Fahrrädern, bei denen die Vorderradbremse vor oder auch hinter der Vorderradgabel angeordnet ist, die Aerodynamik erheblich verbessert werden.

Wenngleich die erfindungsgemäße Anordnung des Aktivierungselements für die Bremseinheit durch die untere Lageraufnahme, insbesondere auch durch die obere Lageraufnahme in bevorzugter Ausführungsform in Kombination mit einer Doppelbrückengabel realisiert ist, ist eine derartige Anordnung des Aktivierungselements in Verbindung mit der unterhalb der Gabelkrone und gegebenenfalls in der Gabelkrone angeordneten Bremseinheit auch bei einem herkömmlichen die beiden Lagerelemente miteinander verbindenden und insbesondere verspannenden Steuerrohr möglich.

Die Bremseinheit weist vorzugsweise zwei Bremshebel auf, die innerhalb der Gabelbeine und/ oder der Gabelkrone angeordnet sind. Vorzugsweise sind die Bremshebel hierbei vorzugsweise teilweise in dem oberen, in Richtung der Gabelkrone weisenden Bereich der Gabelbeine und teilweise innerhalb der Gabelkrone angeordnet. In bevorzugter Ausführungsform ragen die Bremshebel somit nicht aus der Fahrradgabel heraus, so dass eine aerodynamisch optimierte Außenfläche der Gabel realisierbar ist.

Vorzugsweise handelt es sich bei den Bremshebeln um schwenkbare Bremshebel, deren Schwenkachse ebenfalls innerhalb der beiden Gabelbeine und/ oder der Gabelkrone angeordnet ist. Hierbei sind in bevorzugter Ausführungsform die beiden Schwenkhebel in einer Ebene angeordnet, so dass die beiden von den unteren Enden der Bremshebel getragenen Bremsbacken exakt einander gegenüberliegen und insbesondere die von den Bremshebeln auf die Bremsbacken übertragenen Kräfte einander gegenüberliegend in einer senkrecht zur Längsrichtung bzw. senkrecht zur Mittelebene des Vorderrads angeordneten Ebene liegen. Auch die beiden freien Bremshebelenden, d.h. diejenigen Enden der Bremshebel, die keine Bremsbacken tragen, sind in bevorzugter Ausführungsform einander gegenüberliegend angeordnet. Insbesondere kreuzen sich die beiden Bremshebel nicht.

Die Schwenkachsen können hierbei oberhalb der die Bremsbacken tragenden Enden angeordnet sein, so dass das Betätigen der Bremse durch Auseinanderdrücken der beiden oberen freien Enden der Bremshebel erfolgt. Ebenso ist es möglich, die Schwenkachsen unterhalb der sodann in einem Zwischenstück der Bremshebel angeordneten Bremsbacken anzuordnen, so dass das Betätigen der Bremse durch Zusammendrücken der beiden oberen freien Enden der Bremshebel erfolgt.

Die Betätigung der beiden Bremshebel erfolgt vorzugsweise durch eine gemeinsame Betätigungseinrichtung. Die Betätigungseinrichtung wird nachfolgend anhand einer Bremseinheit beschrieben, bei der die Schwenkachsen oberhalb der die Bremsbacken tragenden freien Enden angeordnet sind. Ein entsprechend ausgestaltetes Betätigungselement kann selbstverständlich auch bei einer Bremseinheit vorgesehen sein, bei denen die Schwenkachsen unterhalb der Bremsbacken vorgesehen sind.

Die Bremseinheit ist in bevorzugter Ausführungsform daher zwischen den beiden freien Bremshebelenden angeordnet. Die Betätigungseinrichtung weist vorzugsweise mindestens ein auf die Bremshebelenden einwirkendes Betätigungselement auf. Beispielsweise ist es möglich, dass die beiden Bremshebelenden schräg verlaufen bzw. aufeinander zu gerichtet sind. Zwischen den beiden Bremshebelenden kann sodann ein beispielsweise trapez- oder dreieckförmiges Betätigungselement angeordnet sein. Durch Verschieben bzw. Ziehen eines derartigen Betätigungselements nach oben werden die beiden freien Enden der Bremshebelenden auseinandergedrückt. Da diese über Schwenkachsen gehalten sind, werden die beiden Bremsbacken aufeinander zu bewegt und gegen die Felge gedrückt.

In besonders bevorzugter Ausführungsform der Betätigungseinrichtung weist diese zwei Betätigungselemente auf. Die beiden Betätigungselemente, die vorzugsweise über einen gemeinsamen Bremszug oder eine gemeinsame Hydraulikleitung betätigt werden, sind vorzugsweise als Schwenkhebel ausgebildet. Die Schwenkhebel, die insbesondere an einem Halteelement fixiert sind, werden, insbesondere gemeinsam, durch Betätigen des Bremszugs oder Aufbringen einer Hydraulikkraft verschwenkt. Die Schwenkhebel bringen eine Kraft auf die freien Enden der Bremshebelenden auf, wodurch diese auseinander gedrückt werden. Dies bewirkt wiederum ein Bewegen der beiden Bremsbacken aufeinander zu.

Die beiden vorzugsweise als Schwenkhebel ausgebildeten Betätigungselemente sind derart schwenkbar an einem Halteelement fixiert, dass durch Betätigen der Schwenkhebel diese in entgegengesetzte Richtung zum Bremsen nach außen verschwenkt werden. Insbesondere ist das Halteelement innerhalb der Gabelkrone angeordnet, insbesondere fixiert. In bevorzugter Weiterbildung weist das Halteelement vorzugsweise zwei als Anlageflächen für die Bremshebelenden ausgebildete Seitenflächen auf. Bei geöffneter Bremse können die Bremshebel an diesen Flächen anliegen.

Erfindungsgemäß ist zur Verbesserung der Aerodynamik das Aktivierungselement wie der Bremszug oder eine entsprechende Hydraulikleitung innerhalb des Rahmens anzuordnen. Hierbei ist es bevorzugt, dass der Bremszug durch die Gabelkrone und die untere Lageraufnahme geführt ist. Von dort gelangt der Bremszug in das Steuerrohr des Rahmens und kann von hier durch die obere Lageraufnahme und das den Lenker tragende Bauteil zu dem am Lenker angeordneten Bremsgriff geführt werden. Ferner ist es bevorzugt, dass die insbesondere als Lagerzapfen ausgebildete Lageraufnahme an ihrer Oberseite verschlossen ist, so dass die Oberseite der Lageraufnahme als Zuganschlag für den Bremszug genutzt werden kann. Der Zug kann somit einschließlich Hülle durch das Steuerrohr geführt werden und mündet in den Zuganschlag. Unterhalb des Zuganschlags verläuft der Zug sodann frei, d.h. ohne Hülle, zu dem Betätigungselement der Bremseinheit.

In einer besonders bevorzugten Ausführungsform der erfindungsgemäßen Fahrradgabel mit Bremseinheit ist es möglich, diese derart auszugestalten, dass der Querschnitt des Gabelbeins in der Höhe des Reifens ein Verhältnis von Länge zu Breite von maximal 3:1 aufweist. Insofern werden mit der erfindungsgemäßen Fahrradgabel mit Bremseinheit auch die strengen Regeln des UCI, d.h. des Fahrradsportverbandes, erfüllt.

Nachfolgend wird die Erfindung anhand einer bevorzugten Ausführungsform unter Bezugnahme auf die anliegenden Zeichnungen näher erläutert.

Es zeigen:
- Fig. 1: eine schematische, teilweise geschnittene Ansicht des Fahrradrahmens im Bereich des Steuerrohrs zusammen mit der erfindungsgemäßen Fahrradgabel,
- Fig. 2: eine schematische Seitenansicht der Fahrradgabel im Bereich der Gabelkrone, und
- Fig.3: eine schematische, geschnittene Rückansicht der erfindungsgemäßen Fahrradgabel.

Nachfolgend wird die Erfindung anhand einer Doppelbrückengabel beschrieben, wobei die erfindungsgemäße Anordnung der Bremseinheit unterhalb bzw. teilweise in der Gabelkrone mit entsprechend erfindungsgemäßer Führung des Aktivierungselements auch bei einer herkömmlichen Gabel vorgesehen sein kann, bei der die beiden Lagerelemente durch ein steifes Steuerrohr miteinander verbunden sind.

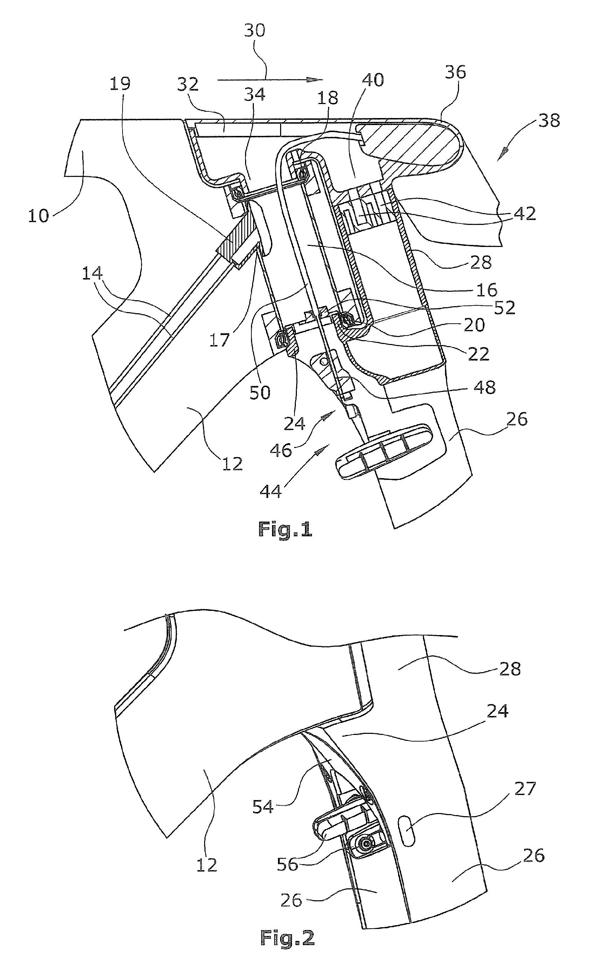

In Fig. 1 ist ein Ausschnitt einer Zeitfahrmaschine schematisch dargestellt. Hierbei ist ein Oberrohr 10 sichtbar, das mit einem Unterrohr 12 verbunden ist, wobei im Unterrohr 12 Schaltzüge 14 angeordnet sind. In einem Steuerrohr 16 ist ein oberes Lager 18 sowie ein unteres Lager 20 angeordnet. Das untere Lager 20 ist von einer als Lagerzapfen ausgebildeten Lageraufnahme 22 getragen. Die Lageraufnahme 22 ist im dargestellten Ausführungsbeispiel einstückig mit einer Gabelkrone 24 ausgebildet. Die Gabelkrone 24 verbindet die beiden Gabelbeine 26, wobei es sich hierbei insbesondere um eine aus Verbundwerkstoff hergestellte, insbesondere glasfaserverstärkte Gabel handelt, so dass die Gabelkrone 24 und die Gabelbeine 26 ebenfalls einstückig ausgebildet sind. Ferner weist die Gabel einen Gabelschaft 28 auf, der in Fahrtrichtung 30 vor dem Steuerrohr 16 angeordnet und somit gegenüber der Gabelkrone 24 versetzt ist.

Ein oberes Bauteil 32 des Lenkkopfs weist eine ebenfalls zapfenförmige Lageraufnahme 34 zur Aufnahme des oberen Lagers 18 auf und bildet somit den Vorbau aus. Ferner weist das Bauteil 32 einen Ansatz 36 auf, der einen Fahrradlenker 38, im dargestellten Ausführungsbeispiel einen Triathlonlenker, trägt. Zwischen der Lageraufnahme 34 und dem Ansatz 36 ist ein in Richtung des Gabelschafts 28 weisender Ansatz 40 vorgesehen. Der Ansatz 40 ist über Schrauben 42 mit dem Gabelschaft 28 verbunden.

Unterhalb der Gabelkrone 24 ist eine in die Gabelbeine 26 sowie die Gabelkrone 24 integrierte Bremseinheit 44 angeordnet. Die Bremseinheit 44 weist eine Betätigungseinrichtung 46 auf, die mit einem Bowdenzug 48 betätigbar ist. Der Bowdenzug 48 führt durch die Gabelkrone 24 und die Lageraufnahme 22 in das Innere des Steuerrohrs 16. Weiter führt der Bowdenzug 48 durch das obere Lager 18 hindurch und ist von dort zu dem Lenker 38 bzw. der Bremse geführt. Die Lageraufnahme 22 ist an der Oberseite verschlossen, so dass eine Hülse 50 des Bowdenzugs 48 nur innerhalb des Steuerrohrs angeordnet ist und bis zum Bremshebel führt. Die Hülse 50 ist in einem zylindrisch ausgebildeten Zugendanschlag 52, der vorzugsweise einstückig mit der Lageraufnahme 22 ausgebildet ist, gehalten.

Die Bremseinheit 44 ist erfindungsgemäß vorzugsweise unterhalb einer Drehachse der Gabel angeordnet, wobei die Drehachse im dargestellten Ausführungsbeispiel im Wesentlichen mit der Hülse 50 innerhalb des Steuerrohrs 16 zusammen fällt.

In montiertem Zustand (Fig. 2) ist eine Rückseite der Gabelbeine 26 sowie der Gabelkrone 24 mit einem Deckelelement 54 verschlossen. Insofern sind bei fertig montierter Bremseinheit 44 nur noch die beiden Bremsbacken 56 sichtbar.

Zur Justage der Bremsbacken 56 kann jeweils an der Außenseite der Gabelbeine 26 ein sich in Längsrichtung erstreckendes Langloch 27 vorgesehen sein, durch das beispielsweise mit Hilfe eines Inbusschlüssels die Bremsbacke justiert werden kann.

Des Weiteren ist es bevorzugt, dass an einer Innenseite der Gabelbeine 26 eine Ausbuchtung zur Aufnahme zumindest eines Teils der Bremsbacken vorgesehen ist. Hierdurch kann der Abstand der Gabelbeine verringert werden, so dass die äußeren Abmessungen der Gabel schmaler als bei herkömmlichen Gabeln sind. Dies führt zu einer weiteren Verbesserung der Aerodynamik.

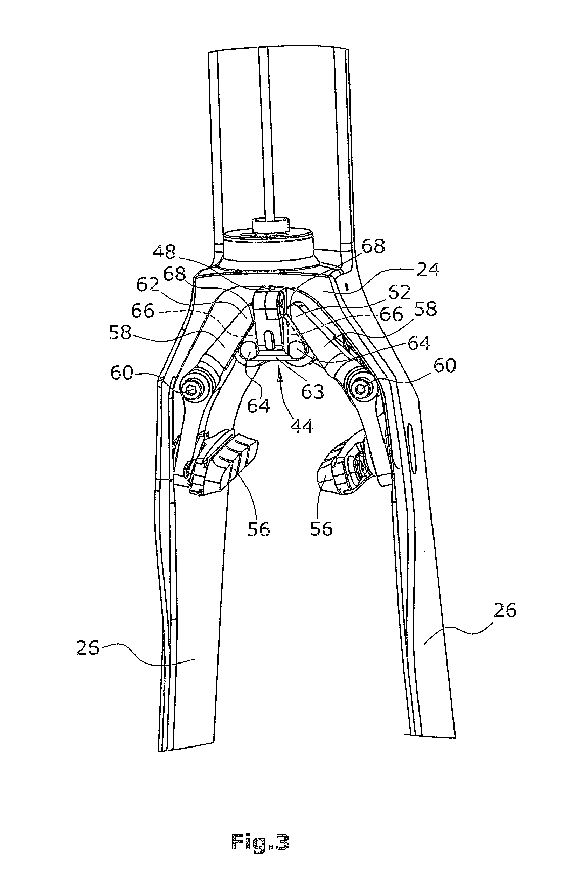

Die erfindungsgemäße Fahrradgabel weist zwei Bremshebel 58 (Fig. 3) auf, die innerhalb der Gabelbeine 26 sowie der Gabelkrone 24 angeordnet sind. Die beiden Bremshebel sind über Schwenkachsen 60 schwenkbar gehalten, wobei die Schwenkachsen 60 ebenfalls innerhalb der Gabelbeine 26 bzw. der Gabelkrone 24 angeordnet sind. Wenn die beiden freien Bremshebelenden 62 aus der in Fig. 3 dargestellten Stellung, in der kein Bremsen erfolgt, zum Bremsen auseinandergedrückt werden, erfolgt ein Bewegen der beiden Bremsbacken 56 nach innen in Richtung der nicht dargestellten Felge. Um dieses Verschwenken der Bremshebel 58 zu realisieren ist die Betätigungseinrichtung 44 vorgesehen. Diese weist ein innerhalb der Gabelkrone angeordnetes Halteelement 63 auf. Das Halteelement 63 trägt zwei Schwenkachsen 64, um die jeweils zwei innerhalb des Halteelements angeordnete, in Fig. 3 gestrichelt dargestellte Schwenkhebel 66 schwenkbar sind. Die Schwenkhebel 66 sind mit dem Bremszug 48 verbunden. Durch Ziehen des Bremszugs 48 in Fig. 3 nach oben erfolgt somit ein Verschwenken der beiden Schwenkhebel 66 nach außen. Hierdurch werden die freien Enden 62 der Bremshebel 58 nach außen gedrückt, was wiederum ein Bewegen der beiden Bremsbacken nach innen in Richtung der Felgen bewirkt.

Das im Wesentlichen in Draufsicht trapezförmige Halteelement 63 weist zwei schräg angeordnete Seitenflächen 68 auf, an denen die freien Enden 62 der Bremshebel 58 anliegen, wenn die Bremse nicht betätigt wird.

## Patentansprüche

1. Fahrradgabel mit Bremseinheit, insbesondere für Rennräder, mit
einer zwei Gabelbeine (26) miteinander verbindenden Gabelkrone (24),
einer mit der Gabelkrone (24) verbundenen unteren Lageraufnahme (22), und
einer unterhalb der Gabelkrone (24) angeordneten Bremseinheit (44),
wobei ein Aktivierungselement (50) für die Bremseinheit (44) durch die untere Lageraufnahme (22) geführt ist.

2. Fahrradgabel nach Anspruch 1, **gekennzeichnet durch** eine obere Lageraufnahme (34), **durch** die das Aktivierungselement (50) ebenfalls geführt ist.

3. Fahrradgabel nach Anspruch 1 oder 2, **dadurch gekennzeichnet, dass** die Bremseinheit (44) zwei Bremshebel (58) aufweist, die innerhalb der Gabelbeine (26) und/ oder der Gabelkrone (24) angeordnet sind.

4. Fahrradgabel nach Anspruch 3, **dadurch gekennzeichnet, dass** die Bremshebel (58) von innerhalb der Gabelbeine (26) und/ oder der Gabelkrone (24) angeordneten Schwenkachsen (60) getragen sind.

5. Fahrradgabel nach Anspruch 3 oder 4, **dadurch gekennzeichnet, dass** zwei freie Bremshebelenden (62) einander gegenüberliegend angeordnet sind.

6. Fahrradgabel nach einem der Ansprüche 3 - 5, **dadurch gekennzeichnet, dass** die beiden Bremshebel (58) von einer gemeinsamen Betätigungseinrichtung (46) betätigbar sind.

7. Fahrradgabel nach Anspruch 6, **dadurch gekennzeichnet, dass** die Betätigungseinrichtung mindestens ein auf die Bremshebelenden (62) einwirkendes Betätigungselement (66) aufweist, wobei vorzugsweise zwei Betätigungselemente (66) vorgesehen sind, die jeweils auf ein Bremshebelende (62) einwirken.

8. Fahrradgabel nach Anspruch 7, **dadurch gekennzeichnet, dass** die beiden Betätigungselemente (66) gemeinsam betätigbar sind.

9. Fahrradgabel nach Anspruch 7 oder 8, **dadurch gekennzeichnet, dass** die beiden Betätigungselemente (66) als Schwenkhebel ausgebildet sind, die in einem innerhalb der Gabelkrone (24) fixierten Halteelement (62) angeordnet sind.

10. Fahrradgabel nach einem der Ansprüche 6 - 9, **dadurch gekennzeichnet, dass** das Aktivierungselement (50) mit der Betätigungseinrichtung (46), insbesondere mit dem mindestens einen Betätigungselement (66) der Betätigungseinrichtung (46) verbunden ist.

11. Fahrradgabel nach Anspruch 9 oder 10, **dadurch gekennzeichnet, dass** das Halteelement (62) vorzugsweise zwei als Anlageflächen (68) für die Bremshebelenden (62) ausgebildete Seitenflächen aufweist.

12. Fahrradgabel nach einem der Ansprüche 3 - 11, **dadurch gekennzeichnet, dass** die Gabelbeine (26) im Bereich der unteren Enden der Bremshebel (58) ein Verhältnis von Länge zu Breite von maximal 3:1 aufweisen.

13. Fahrradgabel nach einem der Ansprüche 1 - 12, **gekennzeichnet durch** einen zur Gabelkrone (24) versetzt angeordneten Gabelschaft (28).
